# EUROPÄISCHE PATENTSCHRIFT

(11) **EP 2 174 055 B1**
(45) Veröffentlichungstag und Bekanntmachung des Hinweises auf die Patenterteilung: **17.07.2013**
(21) Anmeldenummer: 08760086.2
(22) Anmeldetag: 27.05.2008
(51) Int. Cl.: F16P 3/20

(54) **GERÄTESICHERUNGSVORRICHTUNG**
EQUIPMENT PROTECTION DEVICE
DISPOSITIF DE SÉCURISATION D'APPAREIL

(30) Priorität: 26.07.2007 DE 102007035096
(43) Veröffentlichungstag der Anmeldung: 14.04.2010
(73) Patentinhaber: Robert Bosch GmbH, 70442 Stuttgart (DE)
(72) Erfinder: KRAPF, Reiner, 72770 Reutlingen (DE); BRAUN, Heiko, 70178 Stuttgart (DE); BAIERL, Wolfgang, 73630 Remshalden (DE); MAHLER, Michael, 70771 Leinfelden-Echterdingen (DE); HEES, Alexander Werner, 74321 Bietigheim-Bissingen (DE)
(86) Internationale Anmeldenummer: PCT/EP2008/056489
(87) Internationale Veröffentlichungsnummer: WO 2009/013044

(56) Entgegenhaltungen:
- EP-A- 1 163 974
- DE-A1-102004 046 000
- DE-A1-102005 058 993
- GB-A- 1 218 412
- US-A- 3 056 481
- US-A- 5 181 447
- US-A1- 2003 058 121
- US-A1- 2006 037 766
- US-B1- 6 418 829

## Beschreibung

Die vorliegende Erfindung betrifft eine Gerätesicherungsvorrichtung mit einem Sicherheitsmechanismus zur Abkehrung gefährlicher Betriebssituationen bei der Verwendung eines Elektrogeräts, wie beispielsweise eine elektrische Heckenschere, eine Kreissäge, eine Stichsäge, eine Bohrmaschine oder dergleichen, sowie ein Elektrogerät mit einer solchen Gerätesicherungsvorrichtung.

### Stand der Technik

Bei Elektrogeräten der zuvor genannten Art, insbesondere bei tragbaren oder stationären Zerspannungsmaschinen mit spanabhebenden Schneidwerkzeugen, besteht für den Benutzer von Natur aus ein erhebliches Verletzungsrisiko, insbesondere bei unsachgemäßem Umgang mit dem entsprechenden Elektrogerät. Aus diesem Grund sollten derartige Geräte grundsätzlich nur von Personen verwendet werden, die zuvor in Bezug auf die Handhabung desselben geschult wurden.

Um darüber hinaus eine höhere Sicherheit beim Umgang mit solchen Elektrogeräten zu gewährleisten, können diese in Abhängigkeit von der Art der Gefahrenquelle mit verschiedenartigen Gerätesicherungsvorrichtungen ausgestattet werden.

Beispielswiese sind Elektrogeräte mit einer Gerätesicherungsvorrichtung bekannt, die sicherstellen soll, dass das Elektrogerät beidhändig ergriffen wird, um auf diese Weise das von dem Elektrogerät ausgehende Gefahrenpotential zu verringern. Dazu umfasst die Gerätesicherungsvorrichtung beispielsweise einen Sicherheitsmechanismus mit mehreren im Griffbereich des Elektrowerkzeugs beabstandet voneinander angeordneten Druckschaltern, wobei ein Betrieb des Elektrowerkzeugs nur dann möglich ist, wenn es von dem Benutzer in einer vorbestimmten Art und Weise derart ergriffen wird, dass sämtliche Druckschalter durch den Benutzer betätigt werden. Ein Problem bei einer solchen Gerätesicherungsvorrichtung besteht allerdings darin, dass es Ausnahmesituationen gibt, in denen es unumgänglich ist, das Elektrogerät einhändig oder in einer anderen als der vorbestimmten Art und Weise zu ergreifen. Entsprechend wird die Gerätesicherungsvorrichtung häufig umgangen, indem beispielsweise ein oder mehrere Druckschalter mit Hilfe eines Klebebandes betätigt werden, um die vorgeschriebene Handhabung des Gerätes zu simulieren. Derartige provisorische Umgehungslösungen werden aus Gründen der Bequemlichkeit nach der Ausnahmesituation häufig nicht entfernt, so dass die Gerätesicherungsvorrichtung dauerhaft umgangen wird, was natürlich unerwünscht ist. Auch werden Gerätesicherungsvorrichtungen aus den genannten Gründen häufig zerstört oder entfernt, was ebenfalls nicht sinnvoll sein kann.

Ein weiteres Beispiel einer Gerätesicherungsvorrichtung ist in der DE 10 2005 058 993 A1 beschrieben. Diese Gerätesicherungsvorrichtung umfasst einen Sicherheitsmechanismus mit Feldbereitungsmitteln zur Generierung eines kapazitiven Wechselfeldes und Erfassungsmitteln zur Erfassung eines gefährdungs- und/oder abschaltrelevant einstufbaren Zustands. Zur Einstufung des gefährdungs- und/oder abschaltrelevanten Zustands weist der Sicherheitsmechanismus ferner eine Auswertungsschaltung auf, die mit den Erfassungsmitteln gekoppelt ist, wobei die Erfassungsmittel derart ausgebildet sind, dass über diese feldelektrische Änderungen im Umgebungsbereich der gefährdungsrelevanten Struktur erfassbar sind. Mit anderen Worten wird in einem Gefahrenbereich mit Hilfe der Feldbereitungsmittel ein kapazitives Wechselfeld erzeugt, das sich ändert, wenn ein Objekt, wie beispielsweise ein Körperteil des Benutzers, in dieses Wechselfeld eintritt. Diese Änderung wird durch die Erfassungsmittel erfasst, woraufhin die Auswertungsschaltung die Änderung in Bezug auf das Gefahrenpotential bewertet. Ist ein Gefahrenpotential vorhanden, so wird das Elektrogerät beispielsweise abgeschaltet. Auch bei der in der DE 10 2005 058 993 A1 beschriebenen Gerätesicherungsvorrichtung besteht jedoch ein Problem dahingehend, dass Anwendungssituationen des Elektrogerätes denkbar sind, in denen es unerlässlich oder zumindest wünschenswert ist, ein Objekt oder einen Körperteil des Benutzers in dem von den Feldbereitungsmitteln erzeugten Wechselfeld zu positionieren. Treten derartige Anwendungssituationen häufig auf, so führt dies dazu, dass die Gerätesicherungsvorrichtung über kurz oder lang entfernt wird, was unerwünscht ist.

Aus der US 2003/0058121 A1 ist eine Werkzeugmaschine, insbesondere eine schneidende oder sägende Werkzeugmaschine zur Holzbearbeitung mit einem Sicherheitssystem zur Vermeidung von Verletzungen eines Nutzers bekannt In einer detektierten Gefahrensituation ermöglicht das Sicherheitssystem einen kurzfristigen Notstopp der Werkzeugmaschine. Das Sicherheitssystem der US 2003/0058121 A1 lässt sich deaktivieren, um in speziellen Fällen die Bearbeitung von Werkstücken zu ermöglichen, die ansonsten zu einer Auslösung des Sicherheitsmechanismus führen würde. Die US 2003/0058121 A1 offenbart zudem Bedingungen unter denen das deaktivierte Sicherheitssystem wieder aktiviert werden kann.

Es ist daher eine Aufgabe der vorliegenden Erfindung, eine alternative Gerätesicherungsvorrichtung zu schaffen, welche die zuvor beschriebenen Probleme zumindest teilweise löst.

### Offenbarung der Erfindung

Zur Lösung dieser Aufgabe schafft die vorliegende Erfindung eine Gerätesicherungsvorrichtung mit einem Sicherheitsmechanismus zur Abkehrung gefährdender Betriebssituationen bei der Verwendung eines Elektrogeräts, die erfindungsgemäß eine Deaktivierungseinheit umfasst, die ein Deaktivieren des Sicherheitsmechanismus im Betriebszustand des Elektrogeräts gestattet, wobei die Deaktivierungseinheit derart ausgebildet ist, dass sie von einem Benutzer betätigbar ist.

Mit anderen Worten kann der Sicherheitsmechanismus der erfindungsgemäßen Gerätesicherungsvorrichtung vorsätzlich durch den Benutzer deaktiviert werden, wenn eine Anwendungssituation vorliegt, in welcher der Sicherheitsmechanismus im aktivierten Zustand eher störend als dienlich ist oder sogar eine Betätigung des Elektrogeräts gänzlich sperren würde. Entsprechend ist es im Gegensatz zu bekannten Gerätesicherungsvorrichtungen nicht erforderlich, den Sicherheitsmechanismus in umständlicher Art und Weise zu umgehen, diesen unter Zerstörung desselben zu deaktivieren oder ihn vollständig zu entfernen. Mit Hilfe der Deaktivierungseinheit lässt sich der Sicherheitsmechanismus bedarfsgerecht und bequem durch den Benutzer deaktivieren, was bevorzugt manuell erfolgt. Hierzu kann beispielsweise ein einfacher Schalter oder dergleichen vorgesehen werden. Natürlich ist es auch möglich, alternative Deaktivierungsmechanismen vorzusehen.

Gemäß einer bevorzugten Ausgestaltung der vorliegenden Erfindung weist die Gerätesicherungsvorrichtung eine Sicherheitsschaltung auf, die derart ausgebildet ist, dass sie den Sicherheitsmechanismus nach einem Ausschalten des Elektrogerätes bei einem erneuten Wiedereinschalten desselben automatisch aktiviert. Auf diese Weise wird nach dem Einschalten des Elektrogeräts automatisch ein Grundzustand mit aktivem Sicherheitsmechanismus hergestellt, um das von dem Elektrogerät ausgehende Gefahrenpotential zu minimieren. Entsprechend ist grundsätzlich eine aktive Handlung des Benutzers erforderlich, um die von dem Sicherheitsmechanismus ausgehende Schutzwirkung außer Kraft zu setzen.

Die Gerätesicherungsvorrichtung gemäß der vorliegenden Erfindung umfasst ferner bevorzugt eine Aktivierungseinheit, die ein Aktivieren des Sicherheitsmechanismus im Betriebszustand des Elektrogeräts nach vorhergehender Deaktivierung durch die Deaktivierungseinheit gestattet, wobei auch die Aktivierungseinheit derart ausgebildet ist, dass sie von einem Benutzer betätigbar ist. Nachdem der Sicherheitsmechanismus also durch Betätigen der Deaktivierungseinheit deaktiviert wurde, um mit dem Elektrogerät Arbeiten durchzuführen, bei denen der Sicherheitsmechanismus eher hinderlich wäre, kann er nach Abschluss dieser Arbeiten bequem mit Hilfe der Aktivierungseinheit wieder aktiviert werden, so dass die von dem Sicherheitsmechanismus ausgehende Schutzwirkung bei sich anschließenden Arbeiten mit dem Elektrogerät wieder vorhanden ist. Auch die Aktivierungseinheit wird bevorzugt manuell betätigt, wobei auch hier alternative Aktivierungsmechanismen denkbar sind. Es sollte klar sein, dass die Deaktivierungseinheit und die Aktivierungseinheit auch integral in Form eines Kippschalters oder dergleichen ausgebildet sein können. Ferner kann eine Sicherungseinrichtung oder dergleichen vorgesehen werden, die ein versehentliches Betätigen insbesondere der Deaktivierungseinheit verhindert.

Gemäß einer weiteren bevorzugten Ausgestaltung der vorliegenden Erfindung umfasst die Gerätesicherungsvorrichtung eine Protokolliereinrichtung, die derart ausgebildet ist, dass sie zumindest Deaktivierungsereignisse, also Betätigungen der Deaktivierungseinheit, in Bezug auf eine Zeitbasis protokolliert. Eine derartige Protokollierung dient dazu, nachträglich festzustellen, zu welchen Zeitpunkten eine Deaktivierung stattgefunden hat. Im Falle eines Unfalls in Verbindung mit dem Elektrowerkzeug kann dann beispielsweise ermittelt werden, ob der Sicherheitsmechanismus versagt hat oder ob dieser absichtlich deaktiviert wurde. Auf diese Weise können beispielsweise Fragen hinsichtlich einer fehlerhaften Wartung, Haftung oder dergleichen geklärt werden. Die Protokolliereinrichtung kann natürlich auch weitere Ereignisse und/oder Daten protokollieren, wie beispielsweise ein Betätigungen der Aktivierungseinheit, ein Auslösen des Sicherheitsmechanismus, Zeitpunkte von Kalibrierungs- und Wartungsarbeiten des Elektrogeräts, Betriebsstunden des Elektrogeräts, die Seriennummer etc., um nur einige zu nennen.

Ferner umfasst die erfindungsgemäße Gerätesicherungsvorrichtung bevorzugt eine Datenübertragungseinheit, mit deren Hilfe Daten von der Gerätesicherungsvorrichtung gesendet und/oder empfangen werden können. Mit Hilfe dieser Datenübertragungseinheit können beispielsweise die Daten der Protokolliereinrichtung abgefragt werden. Die Datenübertragungseinheit ist bevorzugt derart ausgebildet, dass Daten drahtgebunden und/oder drahtlos mittels Funk, auf optischem Wege oder dergleichen übertragbar sind. Zudem umfasst die Gerätesicherungsvorrichtung vorteilhaft eine Signalausgabeeinheit, die derart ausgebildet ist, dass sie zumindest ein Signal ausgibt, das dem Benutzer den Aktivierungs - und/oder Deaktivierungszustand des Sicherheitsmechanismus mitteilt. Das Signal ist dabei bevorzugt ein optisch und/oder akustisch und/oder haptisch wahrnehmbares Signal. Beispielsweise zeigt ein grün leuchtendes Signal den Aktivierungszustand und ein rot leuchtendes Signal den Deaktivierungszustand des Sicherheitsmechanismus an. Oder beim Aktivieren bzw. beim Deaktivieren wird ein Ton-, ein Vibrationssignal oder dergleichen ausgegeben. Es sollte klar sein, dass diesbezüglich viele Variationen und Kombinationen denkbar sind.

Bevorzugt umfasst die Gerätesicherungsvorrichtung zudem eine Einstelleinrichtung zum Einstellen der Empfindlichkeit von Sensoren des Sicherheitsmechanismus und/oder zum Teachen derselben. Mit Hilfe einer solchen Einstelleinheit kann die Empfindlichkeit der Sensoren bedarfgerecht in Anpassung an die Arbeitsumgebung erhöht oder verringert werden. Entsprechend ist es beispielsweise bei der eingangs beschriebenen Gerätesicherungsvorrichtung gemäß der DE 10 2005 058 993 A1 möglich, das kapazitive Wechselfeld räumlich auszudehnen oder einzuengen. Der Begriff "Teachen" betrifft den Vorgang, bei dem den Sensoren durch Simulieren von bestimmten Betriebssituationen vermittelt wird, wann sie einen Gefahrenzustand erfassen sollen und wann nicht.

Die Einstelleinrichtung ist bevorzugt derart ausgebildet, dass sie manuell von einem Benutzer betätigbar ist.

Schließlich bezieht sich die vorliegende Erfindung auf ein Elektrogerät mit einer Gerätesicherungsvorrichtung der zuvor spezifizierten Art. Die Gerätesicherungsvorrichtung kann fest in das Elektrogerät integriert sein. Alternativ kann die Gerätesicherungsvorrichtung lösbar an diesem angeordnet sein, so dass es gegebenenfalls nachgerüstet werden kann.

Nachfolgend wird die vorliegende Erfindung beispielhaft anhand einer nicht einschränkenden Ausführungsform unter Bezugnahme auf die beiliegenden Zeichnungen beschrieben.

### Ausführungsbeispiel

Es zeigt:
- Fig. 1: eine Vorderansicht einer Bohrmaschine mit einer Gerätesicherungsvorrichtung gemäß einer Ausführungsform der vorliegenden Erfindung; und
- Fig. 2: eine Schematische Ansicht zur Erläuterung einer Protokolliereinrichtung der Gerätssicherungsvorrichtung.

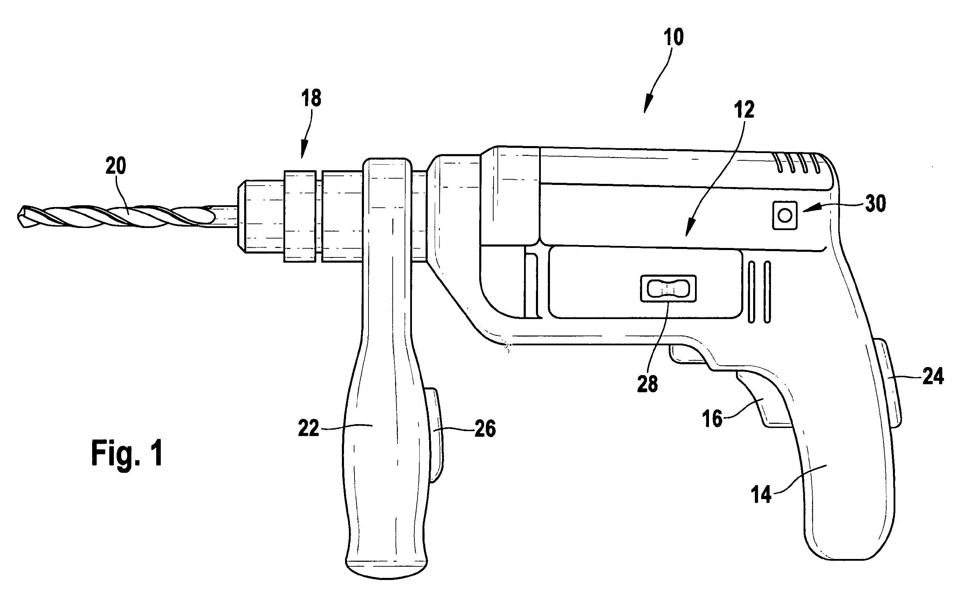

Fig. 1 ist eine Vorderansicht einer Bohrmaschine 10, die als ein Beispiel eines Elektrogeräts gemäß der vorliegenden Erfindung dient. Die Bohrmaschine 10 umfasst einen Hauptkörper 12, in dem die vorliegend nicht näher erläuterten Antriebskomponenten der Bohrmaschine 10 aufgenommen sind. Einteilig mit dem Hauptkörper 12 ist ein erster Handgriff 14 ausgebildet, an dem ein Ein-/AusSchalter 16 zum Ein- und Ausschalten der Bohrmaschine 10 positioniert ist. Ferner nimmt der Hauptkörper 10 ein Bohrfutter 18 auf, in das Werkzeuge eingespannt werden können, wie vorliegend beispielsweise ein Bohrer 20. Zwischen dem Bohrfutter 18 und dem Hauptkörper 12 ist ferner ein zweiter Handgriff 22 positioniert, so dass die Bohrmaschine während ihres Betriebs sicher mit zwei Händen gehalten werden kann. Der prinzipielle Aufbau der in Fig. 1 dargestellten Bohrmaschine 10 ist allgemein bekannt, weshalb dieser nachfolgend nicht weiter im Detail beschrieben wird.

Die Bohrmaschine 10 umfasst eine nicht näher dargestellte erfindungsgemäße Gerätesicherungsvorrichtung mit einem Sicherheitsmechanismus, der dazu dient, den Benutzer der Bohrmaschine 10 gefährdende Betriebssituationen abzukehren. Dazu weist der Sicherheitsmechanismus zwei Druckschalter 24 und 26 auf. Der erste Druckschalter 24 ist an dem ersten Handgriff 14 gegenüber dem Ein-/Aus-Schalter positioniert, so dass er automatisch betätigt wird, wenn der erste Handgriff 14 mit der Hand ergriffen wird. Der zweite Druckschalter 26 ist an dem zweiten Handgriff 22 ebenfalls derart angeordnet, dass eine Betätigung desselben beim Ergreifen des zweiten Handgriffes 22 mit einer Hand stattfindet. Der Sicherheitsmechanismus der Gerätesicherungsvorrichtung ist dabei so konfiguriert, dass die Bohrmaschine 10 nur in Betrieb genommen werden kann, wenn der Ein-/Aus-Schalter 16 und gleichzeitig beide Druckschalter 24 und 26 betätigt werden. Auf diese Weise soll sichergestellt werden, dass zur Verbesserung der Betriebssicherheit ein Arbeiten mit der Bohrmaschine nur dann gestattet wird, wenn diese beidhändig von dem Benutzer ergriffen wird.

An dieser Stelle sei darauf hingewiesen, dass die Druckschalter 24 und 26 lediglich als ein Beispiel für eine mögliche Ausgestaltung des Sicherheitsmechanismus der erfindungsgemäßen Gerätesicherungsvorrichtung dienen und in keiner Weise als einschränkend zu verstehen sind. Bei dem Sicherheitsmechanismus kann es sich beispielsweise auch um einen solchen handeln, der die Arbeitsumgebung der Bohrmaschine 10 überwacht, wie es in der eingangs genannten DE 10 2005 058 993 A1 beschrieben ist, oder um einen noch anders gestalteten Sicherheitsmechanismus.

Grundsätzlich ist der durch die Druckschalter 24 und 26 realisierte Sicherheitsmechanismus der Bohrmaschine von großem Vorteil, da er sicherstellt, dass die Bohrmaschine 10 während ihres Betriebs stets beidhändig von dem Benutzer gehalten wird, wodurch die Unfallwahrscheinlichkeit verringert werden kann. Es gibt jedoch auch Anwendungssituationen, in denen es vom Benutzer nicht gewünscht wird, die Bohrmaschine 10 einhändig zu halten. Dies kann beispielsweise der Fall sein, wenn in einer schmalen Wandaussparung gebohrt werden soll, in der genug Raum zum Einführen der Bohrmaschine 10 vorhanden ist, in der jedoch ein. Ergreifen des zweiten Griffes 22 mangels ausreichendem Platz nicht möglich ist. Ein weiteres Beispiel sind Überkopfarbeiten bei zu kurzer Leiter, bei denen eine einhändige Handhabung der Bohrmaschine 10 oder eine solche mit beiden Händen im Bereich des ersten Handgriffes 14 vorgezogen wird. Die Benutzung der Bohrmaschine in solchen Anwendungssituationen wird jedoch durch den Sicherheitsmechanismus grundsätzlich verhindert.

Um dennoch einen einhändigen Betrieb der Bohrmaschine 10 zu gestatten, umfasst die Gerätesicherungsvorrichtung der Bohrmaschine 10 eine Aktivierungs-/Deaktivierungseinheit 28 in Form eines Kippschalters zum manuellen Aktivieren und Deaktivieren des Sicherheitsmechanismus durch den Benutzer. Entsprechend kann der Sicherheitsmechanismus in den zuvor beschriebenen Ausnahmesituationen deaktiviert werden, so dass die Bohrmaschine 10 auch ohne Betätigen der Druckschalter 24 und 26 betrieben werden kann. Werden anschließend normale Arbeiten durchgeführt, die eine beidhändige und somit sicherere Handhabung gestatten, so kann der Sicherheitsmechanismus durch erneutes Betätigen der Aktivierungs-/Deaktivierungseinheit wieder aktiviert werden.

Aus Sicherheitsgründen umfasst die Gerätesicherungsvorrichtung ferner eine nicht dargestellte Sicherheitsschaltung, die derart ausgebildet ist, dass sie den Sicherheitsmechanismus nach einem Ausschalten der Bohrmaschine 10 bei einem erneuten Einschalten derselben automatisch aktiviert, wodurch ein Grundzustand mit aktiviertem Sicherheitsmechanismus erzielt wird. Entsprechend ist eine aktive Handlung des Benutzers durch Betätigen der Aktivierungs-/Deaktivierungseinheit 28 erforderlich, um die Schutzwirkung des Sicherheitsmechanismus außer Kraft zu setzen.

Um dem Benutzer den Zustand des Sicherheitsmechanismus anzuzeigen, also ob sich dieser in seinem aktivierten oder deaktivierten Zustand befindet, ist an dem Hauptkörper 12 der Bohrmaschine ferner eine Signalausgabeeinheit 30 in Form einer Lampe vorgesehen, die grün leuchtet, wenn sich der Sicherheitsmechanismus im aktivierten Zustand befindet, und rot leuchtet, wenn der deaktivierte Zustand vorliegt.

Ferner wird bei einem Betätigen der Aktivierungs-/Deaktivierungseinheit 28 ein Vibrationssignal ausgegeben, das den Benutzer darauf aufmerksam macht, dass die Einstellung des Sicherheitsmechanismus verändert wurde.

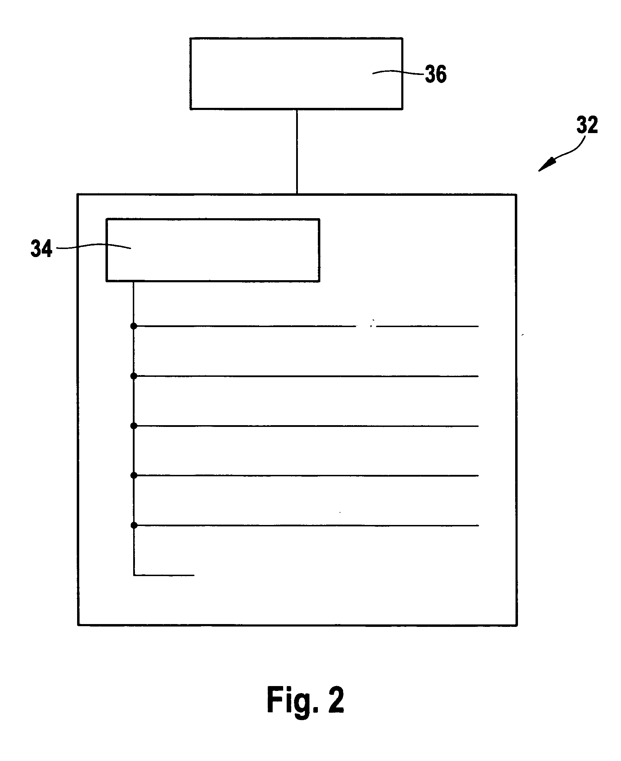

Zudem umfasst der Sicherheitsmechanismus der Gerätesicherungsvorrichtung der Bohrmaschine 10 eine Protokolliereinrichtung 32, die schematisch in Fig. 2 dargestellt ist. Die Protokolliereinrichtung 32 umfasst eine Speichereinheit 34, in der insbesondere Aktivierungs- und Deaktivierungsereignisse der Aktivierungs-/Deaktivierungseinheit 28 in Bezug auf eine Zeitbasis, vorliegend Datum und Uhrzeit, in Datenform abgelegt werden. Diese Protokollierung dient dazu, im Falle eines Unfalls im Zusammenhang mit der Bohrmaschine 10 nachträglich feststellen zu können, in welchem Zustand sich der Sicherheitsmechanismus zum Unfallzeitpunkt befand. Dies kann zur Klärung von Fragen hinsichtlich der Funktionsfähigkeit des Sicherheitsmechanismus oder von Haftungsfragen hilfreich sein. Zudem können aber auch weitere Ereignisse und/oder Daten protokolliert werden, wie beispielsweise der Zeitpunkt der letzten Wartung, der Zeitpunkt der letzten Kalibrierung, die Version der aufgespielten Firmware, die Seriennummer der Bohrmaschine 10, die Laufleistung der Bohrmaschine 10, etc.

Mit der Protokolliereinrichtung 32 ist eine Datenübertragungseinheit 36 verbunden, mit deren Hilfe Daten drahtlos und/oder drahtgebunden austauschbar sind.

Es sollte klar sein, dass die zuvor beschriebene Ausführungsform der vorliegenden Erfindung nicht einschränkend ist, sondern dass Modifikationen und Änderungen vorgenommen werden können, die weiterhin in den Schutzbereich der vorliegenden Erfindung fallen, der durch die beiliegenden Ansprüche definiert ist. Insbesondere ist das erfindungsgemäße Elektrogerät nicht auf eine Bohrmaschine beschränkt. Vielmehr kann es sich bei diesem auch um andere Elektrogeräte handeln, insbesondere um zerspannende Elektrogeräte, wie beispielsweise Sägen, Schleifmaschinen oder dergleichen. Ferner ist der Sicherheitsmechanismus nicht auf einen solchen zum Sicherstellen einer beidhändigen Handhabung eines Werkzeugs beschränkt. Bei dem Sicherheitsmechanismus kann es sich auch um einen solchen handeln, der eine Arbeitsumgebung überwacht, um insbesondere Verletzungen von Körperteilen im Arbeitsbereich zu verhindern, oder um andere Sicherheitsmechanismen oder Kombinationen verschiedener oder gleichartiger Sicherheitsmechanismen.

## Patentansprüche

1. Gerätesicherungsvorrichtung mit einem Sicherheitsmechanismus zur Abkehrung gefährdender Betriebssituationen bei der Verwendung eines Elektrogeräts (10), wobei die Gerätesicherungsvorrichtung eine Deaktivierungseinheit (28) umfasst, die ein Deaktivieren des Sicherheitsmechanismus im Betriebszustand des Elektrogerätes (10) gestattet und derart ausgebildet ist, dass sie von einem Benutzer betätigbar ist, wobei eine Sicherheitsschaltung vorgesehen ist, die derart ausgebildet ist, dass sie den Sicherheitsmechanismus nach einem Ausschalten des Elektrogerätes (10) bei einem erneuten Wiedereinschalten desselben automatisch aktiviert, **dadurch gekennzeichnet, dass** eine Protokolliereinrichtung (32) vorgesehen ist, die derart ausgebildet ist, dass sie zumindest Deaktivierungsereignisse in Bezug auf eine Zeitbasis protokolliert.

2. Gerätesicherungsvorrichtung nach Anspruch 1; **dadurch gekennzeichnet, dass** die Deaktivierungseinheit (28) derart ausgebildet ist, dass sie von einem Benutzer manuell betätigbar ist.

3. Gerätesicherungsvorrichtung nach einem der vorhergehenden Ansprüche, **dadurch gekennzeichnet, dass** sie eine Aktivierungseinheit (28) umfasst, die ein Aktivieren des Sicherheitsmechanismus im Betriebszustand des Elektrogeräts (10) nach vorhergehender Deaktivierung durch die Deaktivierungseinheit (28) gestattet und derart ausgebildet ist, dass sie von einem Benutzer betätigbar ist.

4. Gerätesicherungsvorrichtung nach Anspruch 1, **dadurch gekennzeichnet, dass** die Protokolliereinrichtung (32) derart ausgebildet ist, dass sie weitere Ereignisse und/oder Daten protokolliert.

5. Gerätesicherungsvorrichtung nach einem der vorhergehenden Ansprüche, **dadurch gekennzeichnet, dass** diese eine Datenübertragungseinheit (36) aufweist.

6. Gerätesicherungsvorrichtung nach Anspruch 5, **dadurch gekennzeichnet, dass** die Datenübertragungseinheit (36) derart ausgebildet ist, dass Daten drahtgebunden und/oder drahtlos übertragbar sind.

7. Gerätesicherungsvorrichtung nach einem der vorhergehenden Ansprüche, **dadurch gekennzeichnet, dass** diese eine Signalausgabeeinheit (30) aufweist, die derart ausgebildet ist, dass sie zumindest ein Signal ausgibt, das dem Benutzer den Aktivierungs- und/oder Deaktivierungszustand des Sicherheitsmechanismus mitteilt.

8. Gerätesicherungsvorrichtung nach Anspruch 7, **dadurch gekennzeichnet, dass** das Signal ein optisch und/oder akustisch und/oder haptisch wahrnehmbares Signal ist.

9. Gerätesicherungsvorrichtung nach einem der vorhergehenden Ansprüche, **dadurch gekennzeichnet, dass** diese eine Einstelleinrichtung zum Einstellen der Empfindlichkeit von Sensoren des Sicherheitsmechanismus und/oder zum Teachen derselben aufweist.

10. Gerätesicherungsvorrichtung nach Anspruch 9, **dadurch gekennzeichnet, dass** die Einstelleinrichtung derart ausgebildet ist, dass sie manuell von einem Benutzer betätigbar ist.

11. Elektrogerät mit einer Gerätesicherungsvorrichtung nach einem der vorhergehenden Ansprüche.

12. Elektrogerät nach Anspruch 11, **dadurch gekennzeichnet, dass** die Gerätesicherungsvorrichtung fest in dieses integriert ist.

13. Elektrogerät nach Anspruch 11, **dadurch gekennzeichnet, dass** die Gerätesicherungsvorrichtung lösbar an diesem angeordnet ist.

## Claims

1. Equipment protection apparatus having a safety mechanism for averting hazardous operating situations when using an electrical device (10), the equipment protection apparatus comprising a deactivation unit (28) which allows the safety mechanism to be deactivated in the operating state of the electrical device (10) and is designed in such a manner that it can be operated by a user, a safety circuit being provided and being designed in such a manner that, after the electrical device (10) has been switched off, it automatically activates the safety mechanism when the electrical device is switched on again, **characterized in that** a logging device (32) is provided and is designed in such a manner that it logs at least deactivation events with respect to a time base.

2. Equipment protection apparatus according to Claim 1, **characterized in that** the deactivation unit (28) is designed in such a manner that it can be manually operated by a user.

3. Equipment protection apparatus according to one of the preceding claims, **characterized in that** it comprises an activation unit (28) which allows the safety mechanism to be activated in the operating state of the electrical device (10) following previous deactivation by the deactivation unit (28) and is designed in such a manner that it can be operated by a user.

4. Equipment protection apparatus according to Claim 1, **characterized in that** the logging device (32) is designed in such a manner that it logs further events and/or data.

5. Equipment protection apparatus according to one of the preceding claims, **characterized in that** it has a data transmission unit (36).

6. Equipment protection apparatus according to Claim 5, **characterized in that** the data transmission unit (36) is designed in such a manner that data can be transmitted in a wired and/or wireless manner.

7. Equipment protection apparatus according to one of the preceding claims, **characterized in that** it has a signal output unit (30) which is designed in such a manner that it outputs at least one signal which informs the user of the activation and/or deactivation state of the safety mechanism.

8. Equipment protection apparatus according to Claim 7, **characterized in that** the signal is an optically and/or acoustically and/or haptically perceptible signal.

9. Equipment protection apparatus according to one of the preceding claims, **characterized in that** it has an adjusting device for adjusting the sensitivity of sensors of the safety mechanism and/or for teaching said sensors.

10. Equipment protection apparatus according to Claim 9, **characterized in that** the adjusting device is designed in such a manner that it can be manually operated by a user.

11. Electrical device having an equipment protection apparatus according to one of the preceding claims.

12. Electrical device according to Claim 11, **characterized in that** the equipment protection apparatus is permanently integrated in said device.

13. Electrical device according to Claim 11, **characterized in that** the equipment protection apparatus is releasably arranged on said device.

## Revendications

1. Dispositif de sécurisation d'appareil comprenant un mécanisme de sécurité pour se détourner de situations de fonctionnement dangereuses lors de l'utilisation d'un appareil électrique (10), le dispositif de sécurisation d'appareil comprenant une unité de désactivation (28) qui permet une désactivation du mécanisme de sécurité lorsque l'appareil électrique (10) est en fonctionnement et qui est configurée de telle sorte qu'elle peut être actionnée par un utilisateur, un circuit de sécurité étant prévu, lequel est configuré de telle sorte qu'il active automatiquement le mécanisme de sécurité après une mise à l'arrêt de l'appareil électrique (10) lors d'une remise en marche de celui-ci, **caractérisé en ce qu'**il est prévu un dispositif de consignation (32) qui est configuré de telle sorte qu'il consigne au moins les événements de désactivation en référence à une base de temps.

2. Dispositif de sécurisation d'appareil selon la revendication 1, **caractérisé en ce que** l'unité de désactivation (28) est configurée de telle sorte qu'elle peut être actionnée manuellement par un utilisateur.

3. Dispositif de sécurisation d'appareil selon l'une des revendications précédentes, **caractérisé en ce qu'**il comprend une unité d'activation (28) qui permet une activation du mécanisme de sécurité lorsque l'appareil électrique (10) est en fonctionnement après une désactivation précédente par l'unité de désactivation (28) et qui est configurée de telle sorte qu'elle peut être actionnée par un utilisateur.

4. Dispositif de sécurisation d'appareil selon la revendication 1, **caractérisé en ce que** le dispositif de consignation (32) est configuré de telle sorte qu'il consigne des événements et/ou des données supplémentaires.

5. Dispositif de sécurisation d'appareil selon l'une des revendications précédentes, **caractérisé en ce que** celui-ci présente une unité de transmission de données (36).

6. Dispositif de sécurisation d'appareil selon la revendication 5, **caractérisé en ce que** l'unité de transmission de données (36) est configurée de telle sorte que les données peuvent être transmises de manière filaire et/ou sans fil.

7. Dispositif de sécurisation d'appareil selon l'une des revendications précédentes, **caractérisé en ce que** celui-ci présente une unité de délivrance de signal (30) qui est configurée de telle sorte qu'elle délivre au moins un signal qui communique à l'utilisateur l'état d'activation et/ou de désactivation du mécanisme de sécurité.

8. Dispositif de sécurisation d'appareil selon la revendication 7, **caractérisé en ce que** le signal est un signal optique et/ou sonore et/ou perceptible de manière tactile.

9. Dispositif de sécurisation d'appareil selon l'une des revendications précédentes, **caractérisé en ce que** celui-ci présente un dispositif de réglage pour régler la sensibilité de capteurs du mécanisme de sécurité et/ou pour l'enseigner à celui-ci.

10. Dispositif de sécurisation d'appareil selon la revendication 9, **caractérisé en ce que** le dispositif de réglage est configuré de telle sorte qu'il peut être actionné manuellement par un utilisateur.

11. Appareil électrique muni d'un dispositif de sécurisation d'appareil selon l'une des revendications précédentes.

12. Appareil électrique selon la revendication 11, **caractérisé en ce que** le dispositif de sécurisation d'appareil est intégré à demeure dans celui-ci.

13. Appareil électrique selon la revendication 11, **caractérisé en ce que** le dispositif de sécurisation d'appareil est monté sur celui-ci de manière amovible.
